# EUROPÄISCHE PATENTSCHRIFT

(11) **EP 2 085 669 B1**
(45) Veröffentlichungstag und Bekanntmachung des Hinweises auf die Patenterteilung: **28.07.2010**
(21) Anmeldenummer: 09006518.6
(22) Anmeldetag: 22.05.2006
(51) Int. Cl.: F16K 11/044, E03C 1/02, F16K 31/60

(54) **Sanitärarmatur**
Sanitary fittings
Armature sanitaire

(30) Priorität: 28.05.2005 DE 102005024555
(43) Veröffentlichungstag der Anmeldung: 05.08.2009
(62) Teilanmeldung aus: 06761924.7
(73) Patentinhaber: Hansa Metallwerke AG, 70567 Stuttgart (DE)
(72) Erfinder: Assenmacher, Bernd, 70597 Stuttgart (DE)
(74) Vertreter: Ostertag, Ulrich

(56) Entgegenhaltungen:
- DE-A1- 3 124 214
- DE-A1- 4 323 496
- DE-A1- 19 901 553
- US-A- 2 206 609
- US-A- 3 370 609
- US-A- 4 606 370
- US-A- 5 730 184

## Beschreibung

Die Erfindung betrifft eine Sanitärarmatur mit einem Gehäuse, das einen Warmwasserzulauf, einen Kaltwasserzulauf und zwei Mischwasserausgänge aufweist, mit einer in dem Gehäuse angeordneten Kartusche, die ein Mischventil für Kalt- und Warmwasser aufweist, wobei zwischen den beiden Mischwasserausgängen ein Umstellventil angeordnet ist, das einen Doppelventilkegel umfaßt, welcher durch Ziehen an einem Stellglied gegen die Kraft einer Rückstellfeder von einer ersten Stellung, in der er den ersten Mischwasserausgang freigibt, in eine zweite Stellung bewegbar ist, in der er den zweiten Mischwasserausgang freigibt und in der er unter dem Druck von durch den zweiten Mischwasserausgang strömenden Mischwassers gehalten wird, bis er nach Abstellen des Wasserzuflusses selbsttätig in die erste Stellung zurückkehrt.

Eine solche Sanitärarmatur wird beispielsweise in DE 2019877 beschrieben. Die Sanitärarmatur dient als Duscharmatur, bei der die Mischwasserausgänge mit einem freien Auslauf für die Wanne beziehungsweise mit einem Zulauf für eine Brause verbunden werden. Die Umschaltung von Wanne auf Brause erfolgt durch Ziehen an dem Stellglied. Nach Abstellen des Wasserzuflusses schaltet die Duscharmatur unter der Kraft der Rückstellfeder wieder auf den freien Auslauf der Wanne um, damit nicht unbeabsichtigt bei späterem Aufdrehen ein Wasserstrahl aus der Brause spritzen kann.

Gerade bei höherwertigen Sanitärarmaturen wird aber eine solche Bedienung durch Ziehen an einem Stellglied von vielen Benutzern als nicht komfortabel empfunden.

Ein wippenartiges Betätigungsglied am Wannenauslauf einer Sanitärarmatur geht aus der DE 93 14 443 U1 hervor. Zur Betätigung der Wippe ist der Wannenauslauf an seiner Oberseite mit einer gummielastischen Membran ausgestattet. Dies wird ebenfalls nicht als hochwertig oder komfortabel empfunden. Für die aus der DE 297 13 238 U1 bekannte Sanitärarmatur trifft dies ebenfalls zu, bei welcher ein Fortsatz am Hebel eines Einhebelmischers vorgesehen ist, der einen Zugknopf der Umstellvorrichtung betätigt.

Umstellvorrichtungen, die an den Auslauf von Mischbatterien anschließbar sind, sind im Stand der Technik ebenfalls bekannt, zum Beispiel aus der DE 2 125 762 A. Dort ist ein tellerförmiger Ventilschließkörper mittels einer Hohlspindel zwischen zwei Ventilsitzen hin und her bewegbar. Die Betätigung des Ventilschließkörpers erfolgt über einen Flachhebel, welcher an einem Ende gabelförmig ausgebildet ist und dadurch die Hohlspindel nach oben drücken kann, wenn ein durch einen D-ruckknopf betätigter Stößel an einer Schrägfläche des Flachhebels angreift und so das Gabelende nach oben verschwenkt. Hier sind erhebliche Reibungskräfte zu überwinden, worunter ebenfalls der Komfort leidet.

Eine weitere Umstellvorrichtung ist aus der DE 77 16 688 U bekannt geworden; hier wird ein Druck-Zugknopf als Bedienelement verwendet. Eine geometrische Umlenkung der Bedienkraft findet nicht statt. Ziehen wird jedoch, wie oben erwähnt, als unkomfortabel empfunden.

DE 19901553 A1 offenbart eine Sanitärarmatur gemäß dem Oberbegriff des Anspruchs 1.

Aufgabe der Erfindung ist es daher, eine Sanitärarmatur anzugeben, bei der eine Wanne/Brause-Umschaltung auf günstigere Weise vorgenommen werden kann.

Die Aufgabe wird gelöst durch eine Sanitärarmatur mit den Merkmalen des Anspruchs 1. Vorteilhafte Ausgestaltungen sind in den abhängigen Ansprüchen angegeben.

Erfindungsgemäß besitzt die Sanitärarmatur ein durch Drücken betätigbares Bedienelement, welches über einen Umlenkmechanismus derart mit dem Stellglied gekoppelt ist, dass dieses durch Drücken auf das Bedienelement gegen die Kraft der Rückstellfeder in die zweite Stellung bewegt wird. Dabei besitzt der Umlenkmechanismus ein im wesentlichen U-förmiges Umlenkteil, das beweglich um das Gehäuse der Sanitärarmatur liegt, wobei das Umlenkteil an einer Seite an dem Stellglied ansetzt und an der gegenüberliegenden Seite ein Kipphebel gelenkig befestigt ist, der um eine gehäusefeste Achse schwenkbar gelagert und über ein als Druckknopf ausgebildetes Bedienelement bedienbar ist.

Durch ein Bedienelement, welches durch Drücken anstatt durch Ziehen betätigbar ist, wird dem Benutzer ein Gefühl höherer Wertigkeit und Komforts vermittelt. Außerdem wird durch den Umlenkmechanismus die ursprüngliche Geometrie der Sanitärarmatur erhalten, so dass keine grundlegende Umgestaltung des Umstellventils erforderlicht ist.

Damit verbunden ist eine bezüglich der Stellwege und des zur Bedienung erforderlichen Kraftaufwands vorteilhafte Geometrie sowie eine besonders betriebssichere und langlebige Mechanik.

Die erfindungsgemäße Sanitärarmatur kann vorteilhaft als Wandarmatur für Unterputzmontage ausgebildet werden. Sie weist dann eine Trägerplatte für eine schraubenlose Rosette auf, durch die das Bedienelement ragt.

Vorzugsweise ist das Bedienelement federbelastet so dass es kein Spiel aufweist und nach Betätigung wieder in seine Ausgangslage zurückkehrt.

Bevorzugt dient die Sanitärarmatur als Wanne-/Brausearmatur. Der erste Mischwasserausgang ist dabei zur Verbindung mit einem freien Auslauf für eine Wanne vorgesehen und der zweite Mischwasserausgang zur Verbindung mit einem Zufluß für eine Brause.

Im folgenden wird ein Ausführungsbeispiel der Erfindung anhand der Zeichnungen näher erläutert. Es zeigen:
- Figur 1: eine Schnittzeichnung einer Wanne-/Brausearmatur in Stellung "Wanne",
- Figur 2: eine Schnittzeichnung der Wanne-/Brausearmatur aus Figur 1 in Stellung "Brause",
- Figur 3: eine isometrische Darstellung eines Umlenkmecha- nismus und
- Figur 4: eine weitere isometrische Darstellung des Umlenk- mechanismus aus Figur 3 aus einer anderen Per- spektive.

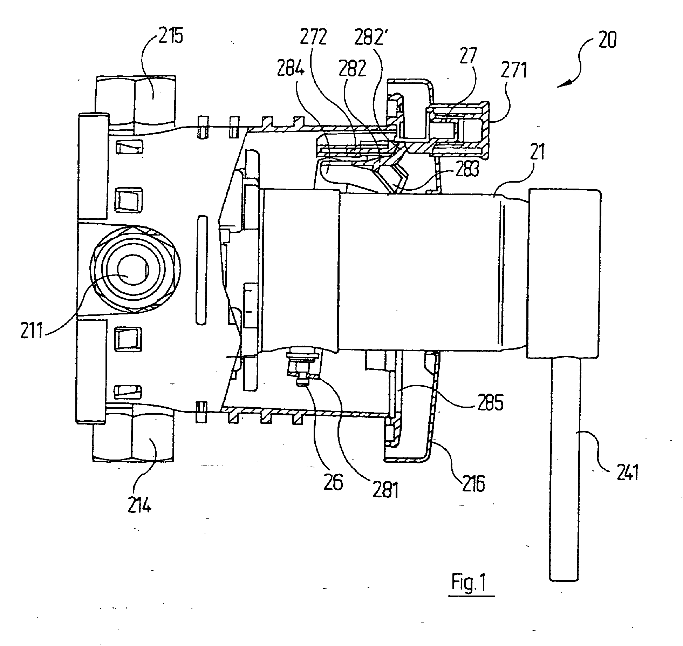

In Figur 1 ist eine Schnittzeichnung einer unterputzinstallierten Wanne-/Brausearmatur 20 gezeigt. Die Wanne-/Brausearmatur 20 weist ein Gehäuse 21 mit zwei Mischwasserausgängen 214, 215, einem Warmwasserzulauf 211 und einem Kaltwasserzulauf auf. Der Kaltwasserzulauf befindet sich auf der abgewandten Seite der Wanne-/Brausearmatur 20 und ist in Figur 1 daher nicht sichtbar. In dem Gehäuse 21 ist eine Kartusche mit einem Mischventil angeordnet, das über einen Bedienhebel 241 bedient wird. Die Mischwasserausgänge 214, 215 sind über ein Umstellventil mit dem Mischventil verbunden. Das Gehäuse 21 ist in Figur 1 nicht aufgeschnitten gezeichnet, so dass Mischventil und Umstellventil nicht zu sehen sind. Die Funktion der-beiden Ventile ist an sich bekannt. Das Umstellventil kann als Doppelventilkegel ausgebildet sein, der mit zwei diametral gegenüberliegenden, gehäusefesten Ventilsitzen zusammenwirkt. Liegt der Doppelventilkegel an einem Ventilsitz an, so ist der Weg zu dem diesem zugeordneten Mischwasserausgang, z. B. Mischwasserausgang 215, versperrt, und es fließt Wasser aus dem Mischventil über den anderen Mischwasserausgang 214. Sinngemäß umgekehrt sind die Verhältnisse, wenn der Doppelventilkegel am anderen Ventilsitz anliegt; in diesem Fall nimmt das Mischwasser den nunmehr freien Weg zum Mischwasserausgang 215, während der Weg zum Mischwasserausgang 214 versperrt ist.

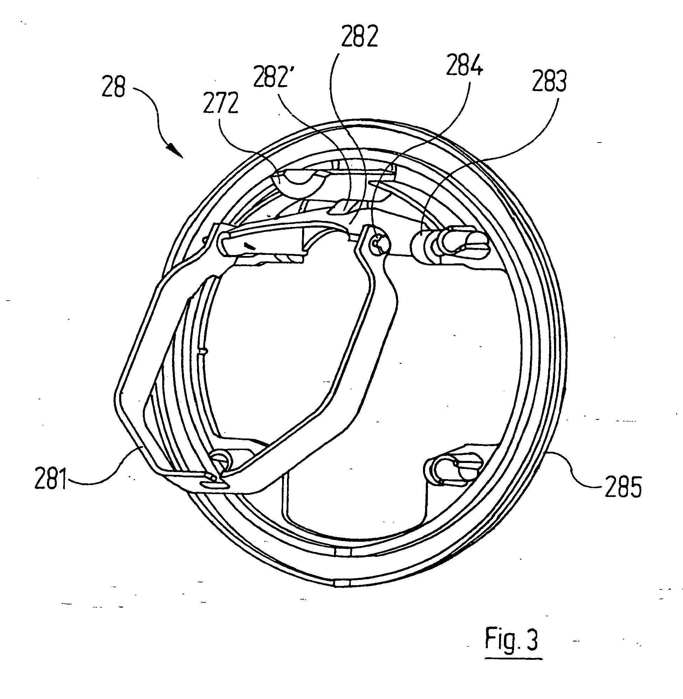

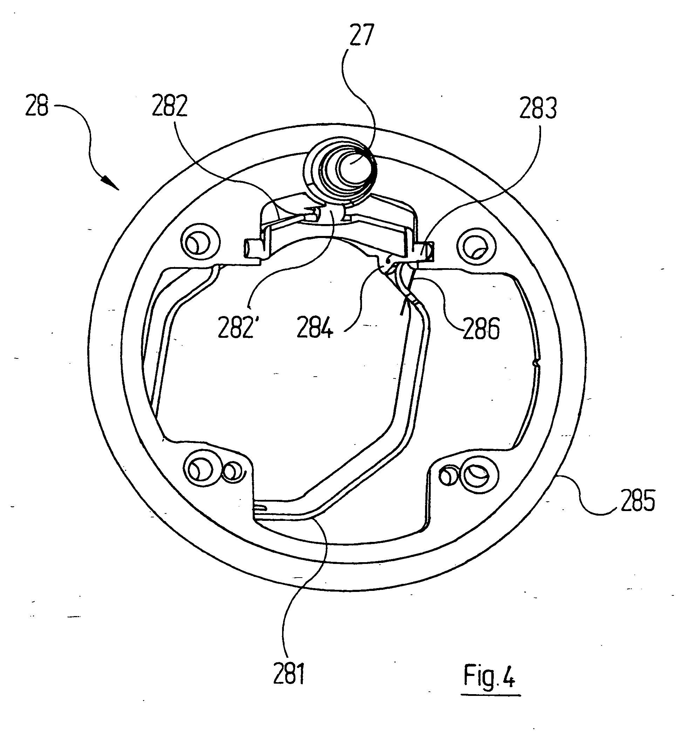

An den Mischwasserausgang 214 wird ein Wannenauslauf angeschlossen und an den Mischwasserausgang 215 der Zulauf einer Brause. Die Umstellung von Ventilstellung "Wanne" zu Ventilstellung "Brause° erfolgt in dem Umstellventil, indem ein Stellglied 26 aus dem Gehäuse 21 der Wanne-/Brausearmatur 20 herausgezogen wird. Das Stellglied 26 wird mit-einem als Druckknopf 27 ausgebildeten Bedienelement über einen Umlenkmechanismus 28 betätigt, der ein U-förmiges Umlenkteil 281 und einen Kipphebel 282 umfasst (vergleiche Figuren 3 und 4). Das U-förmige Umlenkteil 281 liegt beweglich um das Gehäuse 21 der-Wanne-/Brausearmatur 20 und greift auf der in Figur 1 unteren Seite an dem Stellglied 26 an. Auf der gegenüberliegenden Seite sind die Enden der Schenkel des U-förmigen Umlenkteils 281 über Gelenkstifte 284 gelenkig mit dem Kipphebel 282 verbunden. Der Kipphebel 282 ist um eine gehäusefeste Achse 283 schwenkbar gelagert. Die gehäusefeste Achse 283 ist mit einer Trägerplatte 285 verbunden. Der Druckknopf 27 ragt von hinten durch eine Bohrung in der Trägerplatte 285 und einer aufgesteckten Rosette 216. Auf den Druckknopf 27 ist von außen eine Kappe 271 aufgesteckt.

Der Druckknopf 27 besitzt an seinem hinteren Ende einen Druckstift 272, der in einer entsprechenden Führung im Gehäuse 21 der Wanne-/Brausearmatur 20 geführt ist. Der Kipphebel 282 weist einen Ansatz 282' auf, der in eine Ausnehmung in dem Druckstift 272 eingreift.

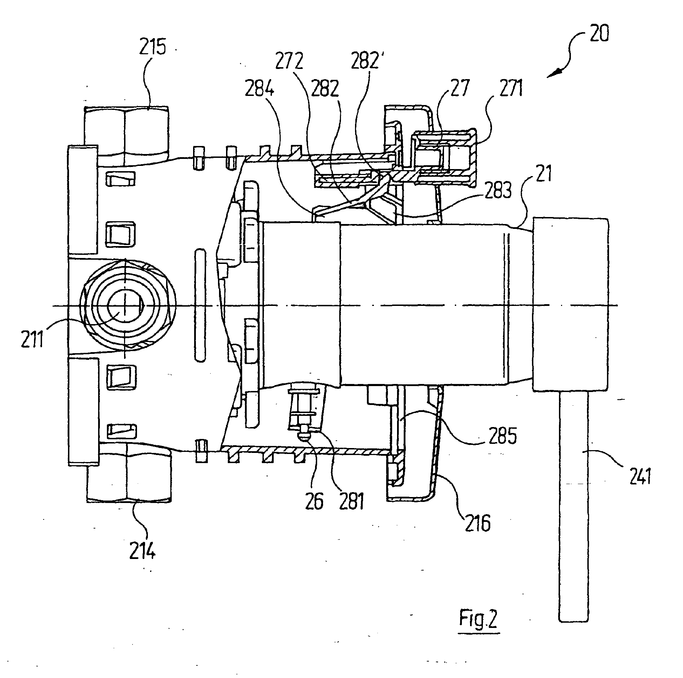

In Figur 1 ist die Wanne-/Brausearmatur 20 in der Ventilstellung "Wanne" gezeigt, in der Wasser aus dem Mischwasserausgang 214 ausströmt. Durch einen leichten Druck auf den Druckknopf 27 bzw. die aufgesteckte Hülse 271 wird der Ansatz 282' von dem Druckstift 272 mitgenommen und der Kipphebel 282 so um die gehäusefeste Achse 283 verschwenkt. Der Kipphebel 282 bewegt dadurch das U-förmige Umlenkteil 281 in der Figur nach unten. Dadurch wird das Stellglied 26 aus der Wanne-/Brausearmatur 20 herausgezogen und schaltet das Umstellventil in die Stellung "Brause", in der Wasser aus dem Mischwasserausgang 215 ausströmt. Diese Stellung ist in Figur 2 gezeigt.

Der oben erwähnte Doppelventilkegel weist eine Ausgangsstellung auf, in welcher er den Weg zum Mischwasserausgang 214 frei gibt (Wannenauslauf) und den anderen Mischwasserausgang 215 versperrt. Diese Ausgangsstellung kann beispielsweise durch die Kraft einer Feder herbeigeführt werden. Wird der Doppelventilkegel jedoch in die entgegengesetzte Endstellung bewegt, so hinterströmt Mischwasser den Doppelventilkegel und der Wasserdruck hält den Doppelventilkegel gegen die Kraft der Feder am entsprechenden Ventilsitz. Erst nach Abstellen des Wasserzuflusses kehrt der Doppelventilkegel durch die Federkraft in die Ausgangsstellung zurück.

In Figur 3 ist der Umlenkmechanismus 28 der Wanne-/Brausearmatur 20 herausgezeichnet. Mit der Trägerplatte 285 ist der Kipphebel 282 über eine Achse 283 verbunden. Das U-förmige Umlenkteil 281 ist über die Achse 284 mit dem Kipphebel 282 verbunden. Der Ansatz 282' am Kipphebel 282 greift hinter der Trägerplatte 285 in die Ausnehmung in dem einstückig mit dem Druckknopf 27 verbundenen Druckstift 272. Figur 4 zeigt den Umlenkmechanismus 28 der Wanne-/Brausearmatur 20 von vorne. Der Druckstift 272 greift an dem Ansatz 282' des Kipphebels 282 an und verschwenkt diesen bei Betätigung des Druckknopfs 27 um die Achse 283. Eine um die Achse 283 gespannte spiralförmige Torsionsfeder, deren Ende 286 in Figur 5 gegen das U-förmige Umlenkteil 281 drückt, sorgt dafür, dass der Kipphebel 282 stets an dem Druckknopf 27 anliegt, so dass der Druckknopf 27 kein Spiel aufweist.

## Patentansprüche

1. Sanitärarmatur mit einem Gehäuse (21), das einen Warmwasserzulauf (211), einen Kaltwasserzulauf und zwei Mischwasserausgänge (214, 215) aufweist, mit einer in dem Gehäuse (21) angeordneten Kartusche, die ein Mischventil für Kalt- und Warmwasser aufweist, wobei zwischen den beiden Mischwasserausgängen (214, 215) ein Umstellventil angeordnet ist, das einen Doppelventilkegel umfaßt, welcher durch Ziehen an einem Stellglied (26) gegen die Kraft einer Rückstellfeder von einer ersten Stellung, in der er den ersten Mischwasserausgang (214) freigibt, in eine zweite Stellung bewegbar ist, in der er den zweiten Mischwasserausgang (215) freigibt und in der er unter dem Druck des durch den zweiten Mischwasserausgang (215) strömenden Mischwassers gehalten wird, bis er nach Abstellen des Wasserzuflusses selbsttätig in die erste Stellung zurückkehrt,
**gekennzeichnet durch**
ein **durch** Drücken betätigbares Bedienelement (27), welches über einen Umlenkmechanismus (28) derart mit dem Stellglied (26) gekoppelt ist, dass dieses **durch** Drücken auf das Bedienelement (27) gegen die Kraft der Rückstellfeder in die zweite Stellung bewegt wird, wobei
der Umlenkmechanismus (28) ein im wesentlichen U-förmiges Umlenkteil (281) umfaßt, das beweglich um das Gehäuse (21) der Sanitärarmatur (20) liegt, wobei das Umlenkteil (281) an einer Seite an dem Stellglied (26) ansetzt und-an der gegenüberliegenden Seite ein Kipphebel (284) gelenkig befestigt ist, der um eine gehäusefeste Achse (283) schwenkbar gelagert ist und über ein als Druckknopf (27) ausgebildetes Bedienelement betätigbar ist.

2. Sanitärarmatur nach Anspruch 1, **dadurch gekennzeichnet, dass** sie als Wandarmatur für Unterputzmontage ausgebildet ist und eine Trägerplatte für eine schraubenlose Rosette (216) aufweist, durch die das Bedienelement (27) ragt.

3. Sanitärarmatur nach einem der Ansprüche 1 oder 2,
**dadurch gekennzeichnet, dass** das Bedienelement (27) federbelastet ist.

4. Sanitärarmatur nach einem der vorhergehenden Ansprüche, **dadurch gekennzeichnet, dass** sie als Duscharmatur ausgebildet ist und der erste Mischwasserausgang (214) zur Verbindung mit einem Wannenauslauf vorgesehen ist und der zweite Mischwasserausgang (215) zur Verbindung mit einem Zufluß für eine Brause vorgesehen ist.

## Claims

1. Sanitary fitting having a housing (21), which has a hot-water intake (211), a cold-water intake and two mixed-water outlets (214, 215), having a cartridge, which is disposed in the housing (21) and has a mixing valve for cold- and hot water, wherein disposed between the two mixed-water outlets (214, 215) is a changeover valve, which comprises a double cone valve, which as a result of pulling on an actuating member (26) is movable counter to the action of a restoring spring from a first position, in which it releases the first mixed-water outlet (214), into a second position, in which it releases the second mixed-water outlet (215) and in which it is held under the pressure of mixed water flowing through the second mixed-water outlet (215) until, after the inflow of water has stopped, it returns automatically into the first position,
**characterized by**
an operating element (27), which is actuable by pressing and is coupled by a deflecting mechanism (28) in such a way to the actuating member (27) that as a result of pressing on the operating element (27) the actuating member is moved into the second position counter to the action of the restoring spring, wherein the deflecting mechanism (28) comprises a substantially U-shaped deflecting part (281) that is situated movably around the housing (21) of the sanitary fitting (20), wherein the deflecting part (281) at one side is attached to the actuating member (26) and to the opposite side there is fastened in an articulated manner a rocker arm (284), which is mounted pivotably about a housing-fixed axle (283) and actuable by means of an operating element in the form of a pushbutton (27).

2. Sanitary fitting according to claim 1, **characterized in that** it takes the form of a wall fitting for flush mounting and has a supporting plate for a screwless bezel (216), through which the operating element (27) projects.

3. Sanitary fitting according to one of claims 1 or 2, **characterized in that** the operating element (27) is spring-loaded.

4. Sanitary fitting according to one of the preceding claims, **characterized in that** it takes the form of a shower fitting and the first mixed-water outlet (214) is intended for connection to a bath outlet and the second mixed-water outlet (215) is intended for connection to a supply for a shower.

## Revendications

1. Robinetterie sanitaire, avec un corps (21) qui présente une arrivée d'eau chaude (211), une arrivée d'eau froide et deux sorties d'eau mitigée (214, 215), avec une cartouche qui est disposée dans le corps (21) et qui présente un mitigeur pour l'eau froide et l'eau chaude, sachant qu'un distributeur à deux positions est disposé entre les deux sorties d'eau mitigée (214, 215), distributeur qui comprend un cône de soupape double qui, en tirant un organe d'actionnement (26) contre la force d'un ressort de rappel, peut être déplacé d'une première position, dans laquelle il libère la première sortie d'eau mitigée (214), dans une deuxième position dans laquelle il libère la deuxième sortie d'eau mitigée (215) et dans laquelle il est maintenu par la pression de l'eau mitigée s'écoulant par la deuxième sortie d'eau mitigée (215), jusqu'à ce qu'il retourne automatiquement dans la première position lorsque l'afflux d'eau est coupé, **caractérisée par** un élément de commande (27) qui peut être actionné par application d'une pression et qui est accouplé par l'intermédiaire d'un mécanisme de renvoi (28) à l'organe d'actionnement (26) de telle sorte que ce dernier est, en exerçant une pression sur l'élément de commande (27), déplacé dans la deuxième position contre la force du ressort de rappel,
sachant que le mécanisme de renvoi (28) comprend un élément de renvoi (281) essentiellement en forme de U qui est monté à déplacement autour du corps (21) de la robinetterie sanitaire (20), sachant que l'élément de renvoi (281) agit sur un côté sur l'organe d'actionnement (26) et qu'un levier basculant (284) est fixé de manière articulée sur le côté opposé, levier qui est monté à pivotement autour d'un axe (283) solidaire du corps et qui peut être actionné au moyen d'un élément de commande réalisé sous forme de bouton-poussoir (27).

2. Robinetterie sanitaire selon la revendication 1, **caractérisée en ce qu'**elle est conçue comme robinetterie murale pour montage encastré et elle présente une plaque porteuse pour une rosette sans vis (216) à travers laquelle dépasse l'élément de commande (27).

3. Robinetterie sanitaire selon la revendication 1 ou 2, **caractérisée en ce que** l'élément de commande (27) est sollicité par ressort.

4. Robinetterie sanitaire selon l'une des revendications précédentes, **caractérisée en ce qu'**elle est conçue comme robinetterie de douche et la première sortie d'eau mitigée (214) est prévue pour le raccordement à une évacuation de bac à douche, tandis que la deuxième sortie d'eau mitigée (215) est prévue pour le raccordement à une alimentation pour une pomme de douche.
